# EUROPEAN PATENT SPECIFICATION

(11) **EP 3 544 318 B1**
(45) Date of publication and mention of the grant of the patent: **31.03.2021**
(21) Application number: 18461538.3
(22) Date of filing: 20.03.2018
(51) Int. Cl.: H04R 29/00

(54) **REMOTE CHECKING OF MICROPHONE CONDITION IN A NOISE MONITORING SYSTEM**
FERNÜBERPRÜFUNG DER MIKROFONBEDINGUNG IN EINEM GERÄUSCHÜBERWACHUNGSSYSTEM
CONTRÔLE À DISTANCE DE CONDITIONS DE MICROPHONE DANS UN SYSTÈME DE SURVEILLANCE DU BRUIT

(43) Date of publication of application: 25.09.2019
(73) Proprietor: SVANTEK Sp. z o.o., 04-872 Warszawa (PL)
(72) Inventor: Barwicz, Wieslaw, 01-651 Warszawa (PL)
(74) Representative: Kancelaria Eupatent.pl Sp. z.o.o

(56) References cited:
- EP-A1- 3 223 541
- US-A1- 2005 276 423
- US-A1- 2014 369 511

## Description

### TECHNICAL FIELD

The present invention relates to remote checking of microphone condition in a noise monitoring system.

### BACKGROUND

Outdoor noise monitoring systems are used for long-term measurements of noise, e.g. at roads, airports etc. It is essential to continuously check the accuracy of operation of these systems in order to ascertain that the measurement results are correctly generated. It is preferred if the checking can be performed remotely, without a need for an operator to perform manual procedures at the microphone system. One of the checking procedures is to check whether the system operates according to the initial calibration.

So far, typical outdoor noise monitoring stations used condenser microphones. A condenser microphone can be calibrated by means of an electrostatic actuator that comprises an electrode that permits the application of an electrostatic force to the metallic or metalized diaphragm of the microphone in order to perform the calibration. Alternatively, the equivalent capacitance of the microphone can be measured.

It is also possible to perform acoustic calibration by performing comparison of sound levels received by the measured microphone and a reference microphone. However, as the condenser microphones are relatively large and require high performance preamplifiers, the reference microphone would occupy too much space in the measurement system housing, which must meet strict acoustic requirements. Additionally, such system requires generation of a reference acoustic signal, which makes it hardly applicable in practice.

A US patent application US20140369511 discloses a self calibrating dipole microphone formed from two omni-directional acoustic sensors. The microphone includes a sound source acoustically coupled to the acoustic sensors and a processor. The sound source is excited with a test signal, exposing the acoustic sensors to acoustic calibration signals, which are of the same phase. The responses of the acoustic sensors to the calibration signals are compared by the processor and a correction transfer function is determined. The system is designed in particular for a dipole microphone.

MEMS microphones have been recently developed and find more and more applications of use. So far, little research has been conducted on the possibilities of use of the MEMS microphones for outdoor monitoring systems. MEMS microphones have very small dimensions, which allows designing a multi-microphone system having a housing of standard dimensions used in acoustic fields (for example, a 1/2" or 1" diameter). However, the MEMS microphones have no equivalent capacitance that could be measured, as in the case of condenser microphones and they cannot be excited by an electrostatic actuator.

A European patent application EP3223541 discloses an outdoor multi-microphone system with an integrated remote acoustic calibration system. The calibration system comprises a reference microphone for measuring ambient sound and a plurality of measurement microphones. In case the levels measured by the reference microphone and the measurement microphones differ by more than a particular threshold, a negative system check result is output.

The prior art solutions for checking microphone systems required interruption of the regular operation of the system in order to perform the system check and use of a dedicated reference microphone in order to perform the system check.

There is a need to provide an alternative solution, that would allow the system check without interrupting the regular sound measurement operation of the microphone system.

### SUMMARY

There is disclosed herein a method for checking a microphone condition in a noise monitoring system, according to the appended claims.

The present invention is particularly applicable to a microphone system with multiple MEMS microphones, due to the possibility of locating the microphones physically very close to each other, such that all microphones are exposed to the same acoustic field (within the audio frequency band) with a desired accuracy.

### BRIEF DESCRIPTION OF DRAWINGS

The solution is presented herein by means of example embodiments on a drawing, in which:
Fig. 1 shows a functional schematic of the microphone system;
Fig. 2 shows a flowchart of a method for dynamic system checking.

### DETAILED DESCRIPTION

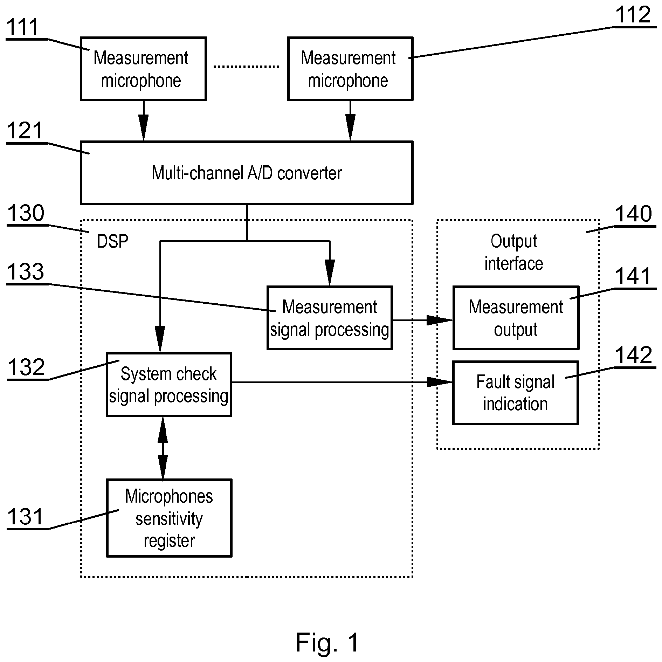

A functional schematic of the microphone system for which a dynamic system check can be performed as described herein is shown in Fig. 1.

The system comprises at least two microphones 111, 112 arranged close to each other. The close arrangement means that the signal received by each of the microphones 111, 112 has substantially the same RMS (root mean square) value, within a particular monitoring frequency range. In other words, when the microphones 111, 112 are placed within an acoustic field to be monitored, the RMS signal level of the acoustic field at each of the microphones is substantially the same. The particular arrangement of the microphones 111, 112 within the housing and distance with respect to each other depends on the particular design of the system and can be verified and adjusted experimentally.

The monitoring frequency range is the range (or a particular frequency) within which the system is supposed to be checked for correctness of operation. For example, outdoor microphone systems for ambient noise monitoring may have a monitoring frequency of 1kHz or a monitoring frequency range from 20 Hz to 10 kHz.

Preferably, the microphones 111, 112 are MEMS microphones.

The microphones 111, 112 are physically arranged close with respect to each other, such as to receive a signal having substantially the same RMS value, i.e. such that the RMS value of a signal measured by one microphone does not differ from the RMS value of the signals measured by other microphones more than an allowable threshold.

The threshold shall not exceed the acceptable limit (which triggers the alarm), such as 1 dB, or shall not exceed 1/2 of the acceptable limit, or shall not exceed 1/10 of the acceptable limit.

For example, in case MEMS microphones are used, due to their small size (being integrated circuits of a size of a few millimeters), a plurality of microphones can be located on a common PCB (printed circuit board) within the distance of most preferably 6 mm (or less) from each other. Preferably, the microphones are arranged within an area of a circle of 1 inch diameter, or 3/4 inch diameter, or 1/2 inch diameter. The microphones are arranged preferably on a common printed circuit board (in that case they are coplanar), but they may also be arranged on separate printed circuit boards, which need not be coplanar.

The outputs of the microphones 111, 112 are connected to a multi-channel analog/digital converter 121, each microphone output connected to a separate channel input of the A/D converter 121. The A/D converter outputs, for each channel, a digital signal corresponding to the signal measured by a particular microphone connected to that channel.

The A/D converter 121 is connected to a signal processing circuit 130, such as a DSP 130 (digital signal processor). The following modules can be implemented as functional modules of the DSP.

A measurement signal processing module 133 is configured to receive the outputs of the multi-channel A/D converter 121 and provide a measurement output signal, corresponding to the sum of signals measured by the measurement microphones, being the typical functionality of the noise measuring system.

Summing of the signals from all measurement channels (microphones) additionally improves signal-to-noise ratio as compared to single microphone measurements (because of uncorrelated self-noise of particular microphones and measurement of a correlated signal). For example, the S/N ratio can be 3dB for two microphones, 5dB for three microphones, 6 dB for four microphones etc.

The measurement result can be output by an output interface 140, for example a remote communication controller configured to transmit signals via a wired or wireless network to a system operator. The output interface 140 may comprise a dedicated measurement output indicator 141, such as a display, configured to visually indicate the current measurement results.

A microphones sensitivity register 131 is provided for storing reference data obtained for a calibration signal for each of the microphones.

A system check signal processing module 132 is configured to compare the current microphones signal output (RMS values) from the multichannel A/D converter 121 with the reference data stored in the register 131 and to determine whether a difference of the microphones sensitivity and/or frequency response stay within acceptable limits. If a difference above limit is identified, a system fault (alarm) signal is generated.

The fault signal can be output by the output interface 140, which may further comprise a dedicated fault signal indicator 142, such as a light emitting diode, configured to visually emit the fault signal.

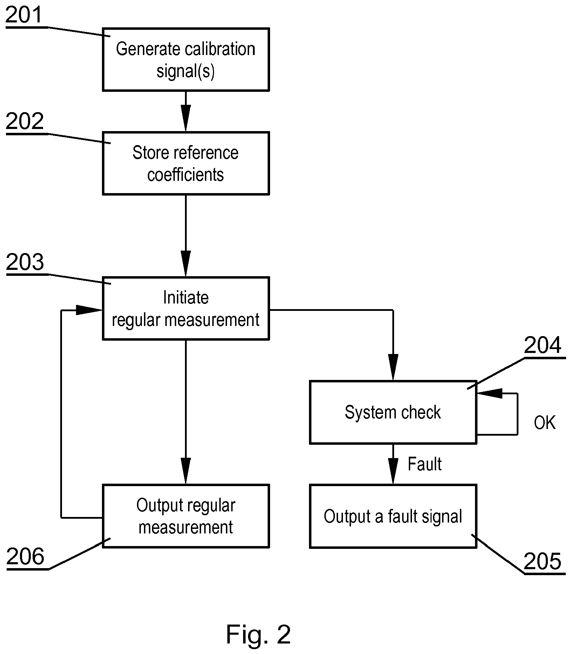

The system can be operated according to the method shown in Fig. 2. First, system calibration is initiated by generating a common calibration signal in step 201 for reception by all the microphones 111, 112. For example, a tone calibrator can be used to generate a signal of a specific frequency or a sequence of signals for a plurality of frequencies within the measurement range of the system. Alternatively, or in addition, a wideband signal generator can be used to generate a wideband signal within the measurement range of the system. Therefore, one or more calibration procedures can be performed for specific signals.

In step 202, microphone sensitivity characteristics are determined for each of the microphones 111, 112 and microphone sensitivity data are stored in the microphones sensitivity register. The sensitivity characteristic should be determined for each microphone. The sensitivity characteristic can be determined for a specific frequency (such as 1000 Hz) or an individual characteristics can be determined for a plurality of frequencies. Moreover, if a wideband calibration signal is used, the sensitivity characteristics can be determined for "A" weighted, "C" weighted or 1/1 octave and/or 1/3 octave bands.

When calibrating the microphones in step 202, it may turn out that each microphone has a slightly different characteristic. The aim of this step is to store the original characteristics of the microphones in the microphones sensitivity register 131 for each of the microphones, in order to make it possible, during further operation of the system, to check whether the characteristic of one microphone has diverged from the characteristics of other microphone to an extent which would indicate that the microphone does not operate correctly any more.

For example, the microphones sensitivity register 131 can have a form of tables storing microphone measurement output values corresponding to input signal of a particular level and frequency.

In addition, difference tables may be generated in the register 131, that indicate what is the difference Δ₀ between the output of one microphone with respect to the output of another microphone for a particular calibration signal level and frequency.

Once the reference data are determined for the calibration signal and stored in the microphones sensitivity register 131, the system can be switched to regular measurement mode.

During the regular measurement in step 203, a check can be initiated in step 204 to compare, by the system check signal processing module 132, the current microphone signals from the A/D converter 121 with the reference data stored in the register 131.

During the system check 203, current differences between RMS values of signals of all microphones are compared with the calibration data stored in the register 131. If these differences are within an accuracy threshold, the system continues normal operation. If not, a system fault signal is generated and output, via the system fault interface 142, in step 205. Typical accuracy threshold could be 1 to 2 dB.

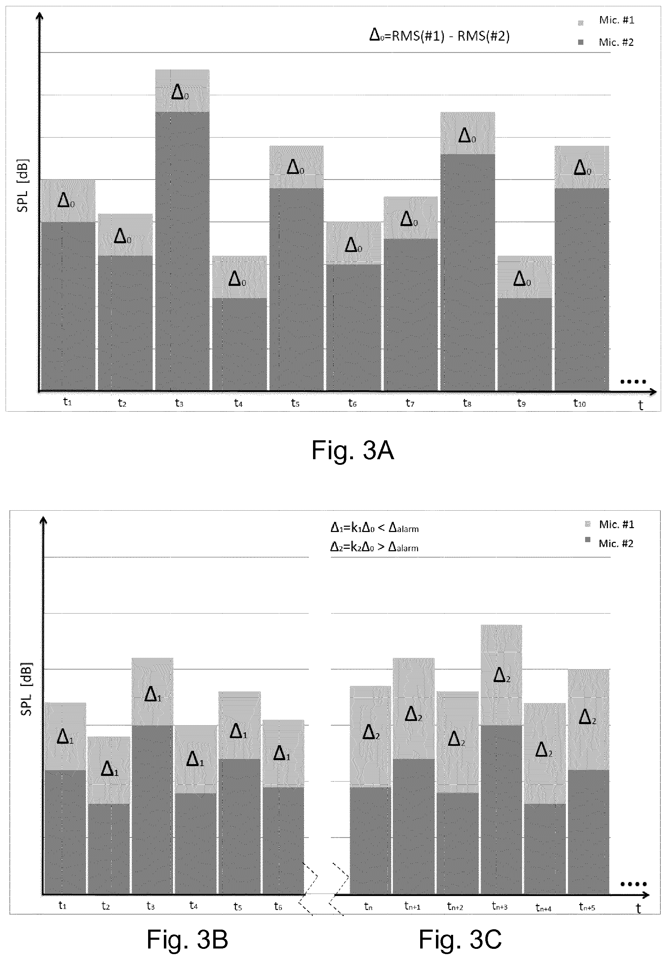

Fig. 3A shows an example of measurement results for a correctly operating system, performed shortly after the calibration procedure. The plots correspond to the broadband response of the Mic#1 and Mic#2. Δ₀ describes the initial sensitivity difference between Mic#1 and Mic#2 stored in register 131.

As the system operates in field, the characteristics of microphones may gradually degrade.

Fig. 3B shows an example of measurement results for a correctly operating system, wherein the microphone characteristics have degraded, i.e. the sensitivity difference Δ₁ is higher than the initial sensitivity difference, but still within acceptable limit. Δ₁ describes the current sensitivity difference between Mic#1 and Mic#2 detected during measurements, which is smaller then the acceptable limit, defined for example as a fraction k1 of the values of Δ₁ and Δ₀.

Fig. 3C shows an example of measurement results for an incorrectly operating system, wherein the microphone characteristics have degraded over an acceptable limit. Δ2 describes the current sensitivity difference between Mic#1 and Mic#2 detected during measurements, which is greater then the acceptable limit. In that case, the alarm signal is generated. For example, the alarm signal can be generated if the current difference exceeds the initial sensitivity difference by a predetermined threshold, such as 1 dB.

The checking procedure can be performed continuously or periodically in desired time intervals. The operation of the signal processor 130 does not disrupt the output of the regular measurement results in step 206 by the measurement output module 141, therefore it does not disrupt the regular measurement operation of the system.

The system is only prone to a situation wherein all microphones would fail in the same manner, such that they would provide the same incorrect results - but the probability of such situation is very unlikely.

Moreover, the system allows to compare not only the RMS value of the signal in the whole measured band, but RMS values of signal in selected frequency bands, i.e. to check variations of the frequency characteristics. This can be done by a DSP processor configured to perform octave analysis for all measurement channels.

## Claims

1. A method for checking a microphone condition in a noise monitoring system, wherein the noise monitoring system comprises:
- at least two microphones (111, 112) arranged physically with respect to each other such that when the microphones (111, 112) are placed within an acoustic field to be monitored, the RMS (root mean square) signal level of that acoustic field at each of the microphones (111, 112) for a monitoring frequency range does not differ from the RMS signal level at the other microphones (111, 112) by more than an allowable threshold; and
- a microphones sensitivity register (131) comprising reference data indicative of an initial sensitivity difference (Δ₀) between output RMS signal levels measured by the microphones (111, 112) in a reference acoustic field;
wherein the method comprises:
- comparing a current difference (Δ₁, Δ₂) between the RMS signal levels concurrently output by the microphones (111, 112) for the currently monitored acoustic field and generating a fault signal if the current difference (Δ₁, Δ₂) differs from the initial sensitivity difference (Δ₀) more than the allowable threshold.

2. The method according to claim 1, wherein two RMS signal levels are substantially the same if the difference between the RMS signal levels is lower than the allowable threshold that triggers the fault signal.

3. The method according to any of previous claims, wherein the differences (Δ₀, Δ₁, Δ₂) between the RMS signal levels are analyzed for a wide band signal.

4. The method according to any of claims 1-2, wherein the differences (Δ₀, Δ₁, Δ₂) between the RMS signal levels are analyzed individually for a plurality of narrow band signals.

5. The method according to any of previous claims, wherein the allowable threshold is defined as a ratio of the current difference (Δ₁, Δ₂) and the initial sensitivity difference (Δ₀).

6. The method according to any of previous claims, wherein the allowable threshold is defined as a difference between the current difference (Δ₁, Δ₂) and the initial sensitivity difference (Δ₀).

## Patentansprüche

1. Verfahren zum Überprüfen eines Mikrofonzustands in einem Geräuschüberwachungssystem, wobei das Geräuschüberwachungssystem Folgendes umfasst:
- zumindest zwei Mikrofone (111, 112), die physisch in Bezug zueinander angeordnet sind, sodass, wenn die Mikrofone (111, 112) innerhalb eines akustischen Feldes platziert sind, das zu überwachen ist, sich der RMS-(Effektivwert-)Signalpegel dieses akustischen Feldes an jedem der Mikrofone (111, 112) für einen Überwachungsfrequenzbereich um nicht mehr als einen zulässigen Schwellenwert von dem RMS-Signalpegel an den anderen Mikrofonen (111, 112) unterscheidet; und
- ein Mikrofonempfindlichkeitsregister (131), das Referenzdaten umfasst, die eine anfängliche Empfindlichkeitsdifferenz (Δ₀) zwischen ausgegebenen RMS-Signalpegeln angeben, die durch die Mikrofone (111, 112) in einem akustischen Referenzfeld gemessen werden;
wobei das Verfahren Folgendes umfasst:
- Vergleichen einer aktuellen Differenz (Δ₁,Δ₂) zwischen den RMS-Signalpegeln, die gleichzeitig durch die Mikrofone (111, 112) für das aktuell überwachte akustische Feld ausgegeben werden und Erzeugen eines Fehlersignals, wenn sich die aktuelle Differenz (Δ₁, Δ₂) um mehr als den zulässigen Schwellenwert von der anfänglichen Empfindlichkeitsdifferenz (Δ₀) unterscheidet.

2. Verfahren nach Anspruch 1, wobei zwei RMS-Signalpegel im Wesentlichen gleich sind, wenn die Differenz zwischen den RMS-Signalpegeln niedriger als der zulässige Schwellenwert ist, der das Fehlersignal auslöst.

3. Verfahren nach einem der vorhergehenden Ansprüche, wobei die Differenzen (Δ₀, Δ₁,Δ₂) zwischen den RMS-Signalpegeln auf ein Breitbandsignal analysiert werden.

4. Verfahren nach einem der Ansprüche 1-2, wobei die Differenzen (Δ₀, Δ₁, Δ₂) zwischen den RMS-Signalpegeln individuell für eine Vielzahl von Schmalbandsignalen analysiert werden.

5. Verfahren nach einem der vorhergehenden Ansprüche, wobei der zulässige Schwellenwert als ein Verhältnis der aktuellen Differenz (Δ₁, Δ₂) und der anfänglichen Empfindlichkeitsdifferenz (Δ₀) definiert ist.

6. Verfahren nach einem der vorhergehenden Ansprüche, wobei der zulässige Schwellenwert als eine Differenz zwischen der aktuellen Differenz (Δ₁, Δ₂) und der anfänglichen Empfindlichkeitsdifferenz (Δ₀) definiert ist.

## Revendications

1. Procédé permettant de vérifier un état de microphone dans un système de surveillance du bruit, ledit système de surveillance du bruit comprenant :
- au moins deux microphones (111, 112) agencés physiquement l'un par rapport à l'autre de sorte que lorsque les microphones (111, 112) sont placés dans un champ acoustique à surveiller, le niveau de signal RMS (moyenne quadratique) de ce champ acoustique au niveau de chacun des microphones (111, 112) pour une plage de fréquences de surveillance ne diffère pas du niveau de signal RMS au niveau des autres microphones (111, 112) de plus d'un seuil admissible ; et
- un registre de sensibilité de microphones (131) comprenant des données de référence indiquant une différence de sensibilité initiale (Δ₀) entre les niveaux de signal RMS de sortie mesurés par les microphones (111, 112) dans un champ acoustique de référence ;
ledit procédé comprenant :
- la comparaison d'une différence actuelle (Δ₁, Δ₂) entre les niveaux de signal RMS délivrés en sortie simultanément par les microphones (111, 112) pour le champ acoustique actuellement surveillé et la génération d'un signal de défaillance si la différence actuelle (Δ₁, Δ₂) diffère de la différence de sensibilité initiale (Δ₀) supérieure au seuil admissible.

2. Procédé selon la revendication 1, deux niveaux de signal RMS étant sensiblement les mêmes si la différence entre les niveaux de signal RMS est inférieure au seuil admissible qui déclenche le signal de défaillance.

3. Procédé selon l'une quelconque des revendications précédentes, lesdites différences (Δ₀, Δ₁, Δ₂) entre les niveaux de signal RMS étant analysées pour un signal à large bande.

4. Procédé selon l'une quelconque des revendications 1 à 2, lesdites différences (Δ₀, Δ₁, Δ₂) entre les niveaux de signal RMS étant analysées individuellement pour une pluralité de signaux à bande étroite.

5. Procédé selon l'une quelconque des revendications précédentes, ledit seuil admissible étant défini sous forme d'un rapport de la différence actuelle (Δ₁, Δ₂) et de la différence de sensibilité initiale (Δ₀).

6. Procédé selon l'une quelconque des revendications précédentes, ledit seuil admissible étant défini sous la forme d'une différence entre la différence actuelle (Δ₁, Δ₂) et la différence de sensibilité initiale (Δ₀).
